Europäisches Patentamt

European Patent Office

Office européen des brevets

(11) Numéro de publication: **0 244 279**
**A1**

## DEMANDE DE BREVET EUROPEEN

(21) Numéro de dépôt: **87400686.9**

(22) Date de dépôt: **26.03.87**

(51) Int. Cl.⁴: **G 02 F 1/11**

(30) Priorité: **02.04.86 FR 8604710**

(43) Date de publication de la demande:
**04.11.87 Bulletin 87/45**

(84) Etats contractants désignés:
**BE CH DE GB IT LI NL**

(71) Demandeur: **CENTRE NATIONAL DE LA RECHERCHE SCIENTIFIQUE (CNRS)**
**15, Quai Anatole France**
**F-75700 Paris (FR)**

(72) Inventeur: **Bridoux, Edouard**
**2A, Route de Monchaux**
**F-59233 Maing (FR)**

Camus, Liévin
2, rue G. Courbet
F-59300 Aulnoy Les Valenciennes (FR)

Bruneel, Christian
32 Ter, Rue de la Résistance Famars
F-59300 Valenciennes (FR)

Cazalet, Marc
7 Villa Jacques Brel
F-59300 Aulnoy Les Valenciennes (FR)

Torguet, Roger
42 Rue Henri Barbusse
F-59880 Saint Saulve (FR)

(74) Mandataire: **Fort, Jacques et al**
**CABINET PLASSERAUD 84, rue d'Amsterdam**
**F-75009 Paris (FR)**

(54) **Procédé et dispositif de modulation acousto-optique multifréquences.**

(57) Le dispositif, utilisable dans une imprimante laser, comporte un mélangeur (14) attaquant le transducteur d'un modulateur acousto-optique (10). Le transducteur a une entrée qui reçoit un signal de modulation à plusieurs voies à fréquences différentes. L'autre entrée reçoit un signal de compensation à au moins deux composantes de puissance, régulé pour que la puissance de sortie du mélangeur reste constante.

FIG.1.

EP 0 244 279 A1

## Description

La présente invention concerne les procédés et dispositifs de modulation par voie acousto-optique. Elle est applicable dans tous les domaines où il est nécessaire de moduler un faisceau lumineux monochromatique, fourni par exemple par un laser, et on peut notamment citer, parmi les applications possibles, la restitution de caractères à l'aide d'une imprimante laser.

Les modulateurs acousto-optiques, en abrégé MAO, sont largement utilisés et bien connus. Dans un tel modulateur, l'angle $\underline{a}$ de déviation d'un faisceau lumineux monochromatique est proportionnel à la fréquence f de l'onde acoustique créée dans le modulateur, fréquence égale à celle du signal électrique appliqué. Si plusieurs signaux à des fréquences différentes $f_1$, $f_2$, $f_3$,... sont simultanément appliqués, le faisceau lumineux monochromatique incident donne naissance d'une part à un faisceau transmis en alignement, d'autre part à des faisceaux déviés dans des directions faisant respectivement des angles $a_1$, $a_2$, $a_3$, avec le faisceau transmis. L'intensité de chaque faisceau dévié est une fonction croissante de la puissance du signal électrique appliqué et on peut donc moduler en intensité les faisceaux déviés par modulation en amplitude des composantes aux diverses fréquences du signal électrique composite appliqué.

Un défaut grave des modulateurs acousto-optiques est qu'ils n'ont une réponse linéaire que pour des rendements (rapport entre l'intensité du faisceau dévié et celle du faisceau incident) très faible. Pour disposer d'une puissance de sortie importante, il faut s'écarter de la zone de linéarité ce qui a notamment pour conséquence :
- dans tous les cas où le modulateur est utilisé avec un bon rendement, des phénomènes de distorsion et de saturation entraînant une perte de contraste,
- dans le cas d'un signal électrique de modulation comportant plusieurs composantes à des fréquences différentes, une inter-modulation.

On a déjà proposé de réduire le phénomène d'inter-modulation dans les systèmes multifréquence en superposant, au signal d'entrée à plusieurs voies à différentes fréquences, un signal électrique de compensation unique à fréquence fixe supérieure ou inférieure à l'ensemble des fréquences $f_1$, $f_2$, ... des composantes du signal de commande. Il en résulte que la compensation est en général trop marquée pour les voies optiques modulées à des fréquences voisines de la fréquence de compansation et insuffisante pour les voies aux fréquences les plus éloignées.

Même lorsque l'on régule le signal de compensation de façon que la puissance totale appliquée au MAO soit sensiblement constante (US-A-4 336 981 ; GB-A-2 036 996) ce problème subsiste et limite les performances du système.

La présente invention vise à fournir un procédé et un dispositif de modulation acousto-optique réduisant la non-linéarité et ses effets, notamment l'intermodulation lorsque le signal de commande comporte plusieurs fréquences.

Dans ce but, l'invention propose notamment un procédé de modulation acousto-optique suivant lequel on applique à un modulateur acousto-optique un signal électrique composite comportant au moins un fréquence de modulation de façon à obtenir, à partir d'un faisceau lumineux monochromatique traversant le modulateur, au moins deux faisceaux déviés, caractérisé en ce que l'on maintient à une valeur sensiblement constante la puissance acoustique totale appliquée au modulateur, par régulation de la puissance électrique d'au moins deux composantes de compensation.

Dans le cas où le signal composite comprend plusieurs composantes de modulation à des fréquences différentes, ce signal comporte avantageusement deux composantes de compensation ayant l'une une fréquence inférieure à l'ensemble des fréquences de modulation, l'autre une fréquence supérieure à toutes les fréquences de modulation.

L'invention sera mieux comprise à la lecture de la description qui suit d'un mode particulier d'exécution de l'invention donné à titre d'exemple non limitatif. La description se réfère aux dessins qui l'accompagnent, dans lesquels :
- la figure 1 est un schéma synoptique montrant une constitution possible d'un dispositif de modulation à deux voies de compensation destinées à corriger l'inter-modulation ;
- la figure 3, similaire à la figure 1, montre une variante.

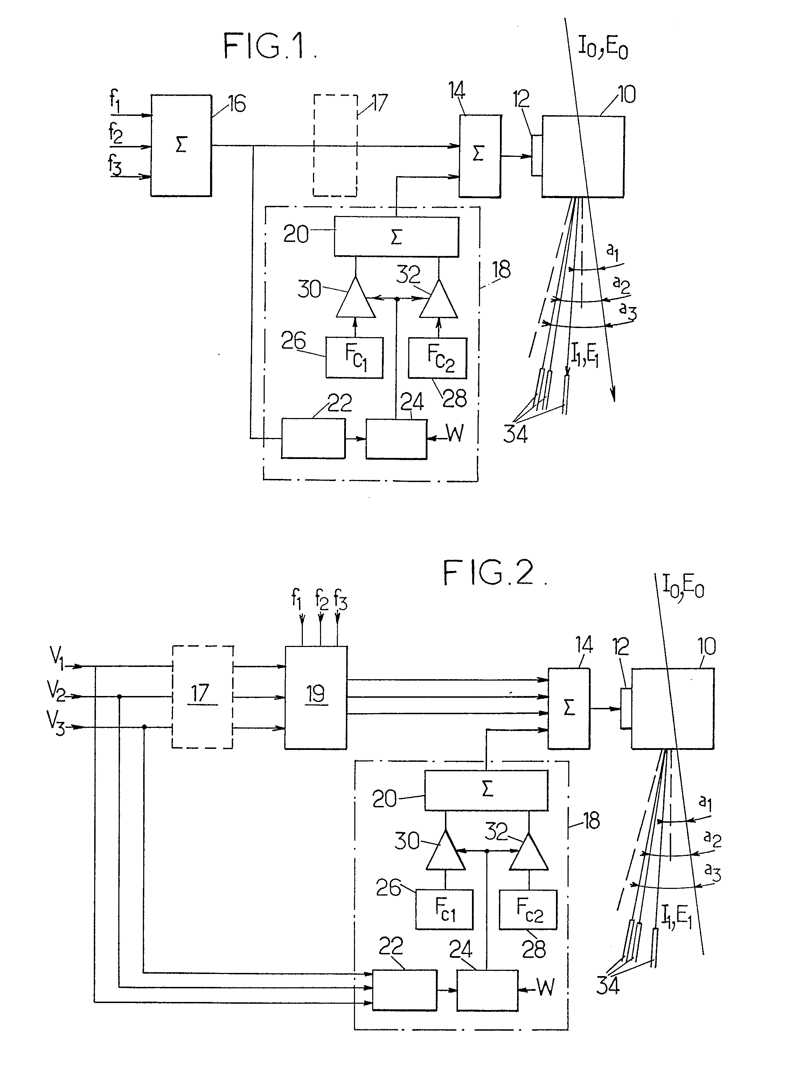

Le dispositif montré en figure 1 comporte un modulateur acousto-optique 10 qui peut être de type classique, muni d'un transducteur 12 de transformation du signal électrique qu'il reçoit en signal acoustique de commande.

Avant de décrire l'invention, on rappellera brièvement les propriétés d'un modulateur acousto-optique classique à large bande. Si on désigne par $\underline{S}$ l'amplitude du signal acoustique appliqué par le transducteur 12, la relation entre le champ électrique $E_1$ du faisceau diffracté, le champ électrique $E_0$ du faisceau incident et $\underline{S}$ est de la forme :
$$E_1 = E_0 \sin A.S$$
où $\underline{A}$ est une constante.

On voit que cette relation, valable dans l'approximation de BRAGG, est non linéaire en S.

De même, la relation qui relie l'intensité lumineuse $I_i$ du faisceau dévié par le signal à fréquence $f_i$ (ordre de diffraction 1) à l'intensité lumineuse incidente $I_0$ et à la puissance de l'onde acoustique $\underline{P}$ est de la forme :
$$I_1 = I_0 \sin^2 B \sqrt{P}$$
où B est une constante.

Pour corriger l'intermodulation qui fait que l'intensité $I_i$ de chacun des faisceaux déviés (d'intensités respectives $I_1$, $I_2$, $I_3$), est influencée non seulement par l'amplitude de la composante à fréquence $f_i$, mais aussi par les autres composantes, on applique au transducteur 12 un signal composite constitué par la sommation, dans un mélangeur à large bande 14 :

d'un signal de modulation contenant les composantes à fréquences $f_1$, $f_2$, $f_3$,....

d'un signal de compensation comportant deux composantes à fréquences respectives $F_1$ et $F_2$, avec :

$$F_1 < f_1 < f_2 < f_3 < .... < F_2$$

La puissance acoustique totale appliquée au MAO 10 doit être maintenue constante. En d'autres termes, si l'on désigne par $P_i$ la puissance acoustique appliquée à un instant donné à la composante d'ordre i du signal de modulation, par $P_{ci}$, celle de la composante d'ordre i du signal de compensation, ce dernier doit être en permanence régulé pour qu'on ait à tout instant :

$$\Sigma P_i + \Sigma P_{ci} = W$$

W étant une constante choisie pour être supérieure à $\Sigma P_i$ pour la valeur maximale de chaque $P_i$.

Dans le mode de réalisation montré en figure 1, les différentes composantes de modulation, à fréquences fixes $f_1$, $f_2$ et $f_3$ et d'amplitudes variables, sont additionnées dans un mélangeur 16. Le signal de sortie du mélangeur 16 est appliqué à l'une des entrées du mélangeur 14. L'autre entrée reçoit le signal de compensation élaboré par un circuit 18. Un circuit retardateur 17 peut être intercalé entre les circuits mélangeurs 16 et 14 dans le but d'appliquer au circuit 14 les signaux au moment où la correction correspondante est disponible compte tenu du délai d'élaboration de cette correction par le circuit 18.

Ce dernier comporte un mélangeur 20 destiné à faire la somme de deux composantes à fréquences respectives $F_{c1}$ et $F_{c2}$, d'amplitudes asservies à la puissance de sortie du mélangeur 16. Cette puissance est mesurée par un circuit 22 de mesure de la puissance $\Sigma P_i$ et appliquée à un soustracteur 24 qui reçoit également le signal de référence W.

Le compensateur incorpore un générateur de signal de commande destiné à réguler la puissance $\Sigma P_{ci}$. Dans le cas illustré en figure 1, où le signal de compensation est à deux composantes à fréquences $F_{c1}$ et $F_{c2}$, le circuit 18 comporte deux oscillateurs 26 et 28 attaquant chacun un amplificateur 30 ou 32 à commande de gain par tension.

Une première solution consiste à répartir la puissance nécessaire à la compensation également entre les deux composantes à fréquences $F_{c1}$ et $F_{c2}$. Il suffit dans ce cas d'appliquer aux deux amplificateurs, le même signal de commande de gain dont l'amplitude varie comme la racine carrée de la différence $W - \Sigma P_i$.

Dans ces conditions, les intensités $I_1$, $I_2$, $I_3$ des faisceaux déviés recueillis par les détecteurs 34 (fibres optiques par exemple) ne présentent qu'une intermodulation très réduite, en particulier lorsque les fréquences $F_{c1}$ et $F_{c2}$ sont très proches des fréquences extrêmes de commande et conduisent donc à des faisceaux déviés proches (schématisés en tirets sur la figure 1).

Une autre solution consiste à répartir l'énergie acoustique entre les fréquences $F_{c1}$ et $F_{c2}$ de façon telle que chaque voie de compensation compense les voies utiles du MAO les plus proches, ce qui conduit à une constitution différente du circuit 18.

Dans certains cas, il peut être avantageux d'utiliser des fréquences $F_{c1}$ et $F_{c2}$ à l'intérieur de la plage couverte des fréquences $f_i$ ou d'utiliser plus de deux fréquences de compensation F.

Dans une variante (Figure 2), les circuits 22 et 24 élaborent les signaux de commande de compensation non pas à partir des signaux de modulation de fréquences $f_1$, $f_2$, ... mais à partir de la seule information de leurs amplitudes $V_1$, $V_2$ ...

Les signaux de modulation sont alors élaborés dans un circuit de modulation 19 dans lequel chaque signal d'amplitude $V_i$ module une porteuse de fréquence $f_i$.

**Revendications**

1. Procédé de modulation acousto-optique suivant lequel on applique à un modulateur acousto-optique un signal électrique composite comportant au moins une fréquence de modulation de façon à obtenir, à partir d'un faisceau lumineux monochromatique traversant le modulateur, au moins deux faisceaux déviés, caractérisé en ce que l'on maintient à une valeur sensiblement constante la puissance acoustique totale appliquée au modulateur, par régulation de la puissance électrique d'au moins deux composantes de compensation.

2. Procédé selon la revendication 1, caractérisé en ce que, le signal composite comprenant plusieurs composantes de modulation, il comprend également deux composantes de compensation ayant l'une une fréquence inférieure à l'ensemble des fréquences de modulation, l'autre une fréquence supérieure à toutes les fréquences de modulation.

3. Procédé selon la revendication 2, caractérisé en ce que la puissance de compensation est répartie également entre les deux composantes du signal de compensation.

4. Procédé selon la revendication 2, caractérisé en ce que la puissance de compensation est répartie entre les deux composantes de compensation de façon telle que chacune compense sensiblement la moitié des voies utiles.

5. Dispositif de mise en oeuvre du procédé de la revendication 1, caractérisé en ce qu'il comporte un mélangeur (14) attaquant le transducteur d'un modulateur acousto-optique dont une entrée reçoit un signal de modulation à plusieurs voies à fréquences différentes et dont l'autre entrée reçoit un signal de compensation à au moins deux composantes de puissance régulé pour que la puissance de sortie du mélangeur reste constante.

0244279

FIG.1.

FIG.2.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 444 470  (IOKA et al.)<br>*    Abrégé;    figures    3,5;<br>revendication 1 * | 1,5 | G 02 F    1/11 |
| A | US-A-3 653 765  (HEARN)<br>* Abrégé; figures 1,2; colonne 1,<br>lignes 60-66 * | 1 | |
| A | FR-A-2 537 319  (FUJI PHOTO FILM<br>CO.)<br>*    Abrégé;    figure    1;<br>revendications 1,2 * | 1 | |
| A | JOURNAL OF PHYSICS E. SCIENTIFIC<br>INSTRUMENTS, vol. 16, no. 7,<br>juillet 1983, pages 603-605, The<br>Institute of Physics, Dorking,<br>GB; A. PODMANICZKY: "Application<br>of optical heterodyning in<br>acousto-optical cell testing"<br>* Figure 1 * | 1 | DOMAINES TECHNIQUES RECHERCHES (Int. Cl.4)<br><br>G 02 F |
| D,A | DE-A-2 942 427  (RICOH CO.)<br>* Page 7, lignes 12-20 * | 1 | |
| P,A | EP-A-0 179 561  (CROSFIELD<br>ELECTRONICS LTD)<br>* Revendication 1; figure 1 * | 1 | |

Le présent rapport de recherche a été établi pour toutes les revendications

| Lieu de la recherche | Date d'achèvement de la recherche | Examinateur |
|---|---|---|
| LA HAYE | 21-07-1987 | FARNESE G.P. |

CATEGORIE DES DOCUMENTS CITES

X : particulièrement pertinent à lui seul
Y : particulièrement pertinent en combinaison avec un
     autre document de la même catégorie
A : arrière-plan technologique
O : divulgation non-écrite
P : document intercalaire

T : théorie ou principe à la base de l'invention
E : document de brevet antérieur, mais publié à la
     date de dépôt ou après cette date
D : cité dans la demande
L : cité pour d'autres raisons

& : membre de la même famille, document correspondant

OEB Form 1503 03 82